(19) Europäisches Patentamt
European Patent Office
Office européen des brevets

(11) Veröffentlichungsnummer: **0 175 063**
**B1**

(12) **EUROPÄISCHE PATENTSCHRIFT**

(45) Veröffentlichungstag der Patentschrift: **12.10.88**

(21) Anmeldenummer: **85107168.8**

(22) Anmeldetag: **11.06.85**

(51) Int. Cl.⁴: **C 08 K 5/37**, C 08 K 5/34, C 08 L 11/00, C 08 L 15/02, C 08 L 23/28, C 08 L 23/34, C 08 L 71/02

# (54) Vulkanisierbare 2-sek.Amino-4,6-dimercapto-s-triazinhaltige Halogenkautschukmischungen.

(30) Priorität: **18.08.84 DE 3430442**

(43) Veröffentlichungstag der Anmeldung: **26.03.86 Patentblatt 86/13**

(45) Bekanntmachung des Hinweises auf die Patenterteilung: **12.10.88 Patentblatt 88/41**

(84) Benannte Vertragsstaaten: **AT BE CH DE FR GB IT LI LU NL SE**

(56) Entgegenhaltungen:
**US-A-2 804 450**

**R.M. MURRAY & D.C. THOMPSON: "The neoprenes", 1964, Seiten 31-39, E.I. Du Pont de Nemours & Co. (Inc.), Wilmington, Delaware, US; Thiadiozole Vulcanisation of chlorinated Polyethylene, Dow Chemical, October 1981**

**Die Akte enthält technische Angaben, die nach dem Eingang der Anmeldung eingereicht wurden und die nicht in dieser Patentschrift enthalten sind.**

(73) Patentinhaber: **Degussa Aktiengesellschaft, Weissfrauenstrasse 9, D-6000 Frankfurt am Main 1 (DE)**

(72) Erfinder: **Wolff, Siegfried, Weiherstrasse 28, D-5303 Bornheim Merten (DE)**
Erfinder: **Schwarze, Werner, Dr., Tiroler Strasse 101, D-6000 Frankfurt am Main (DE)**
Erfinder: **Grewatta, Heinz, Tacitusstrasse 16, D-5000 Köln 1 (DE)**

**EP 0 175 063 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft 2-sek. Amino-4,6-dimercapto-s-triazin-haltige Halogenkautschukmischungen, die silikatische Füllstoffe wie z.B. Kieselsäure und gegebenenfalls Ruß enthalten.

US-A-2 804 450 ist die Verwendung der obengenannten s-Triazinderivate in Chloroprenkautschuk bekannt, jedoch in Kombination mit Ruß als alleinigem Füllstoff.

Ebenfalls nur Ruß enthalten Mischungen aus Nitrilkautschuk mit Fluorkautschuk, die aus der JP-OS-80/160 037 (C.A. 94:193 510p) bekannt sind.

Auch bei der Vulkanisation von Epichlorhydrinkautschuken verwendet man neben 2-Anilin-4,6-dimercapto-s-triazin nur Ruß als Füllstoff (JP-OS-76/36 275, C.A. 85: 34 425n).

Im Vergleich zu den konventionellen Beschleunigern zeigen die Dimercapto-s-triazine jedoch kaum Vorteile in diesen Systemen.

Versuche mit den konventionellen Beschleunigern in Halogenkautschukmischungen, in denen der Ruß völlig oder zu großen Teilen durch Kieselsäure ersetzt worden war, führten zu Vulkanisaten mit geringeren Spannungswerten und höheren Werten für den Compression Set.

Es ist daher überraschend festzustellen, daß 2-sek.Amino-4,6-dimercapto-s-triazinverbindungen in vulkanisierbaren Kieselsäure-gefüllten Halogenkautschukmischungen demgegenüber zu erhöhten Spannungswerten und geringeren Werten für den Compression Set führen.

Gegenstand der Erfindung sind 2-sek.Amino-4,6-dimercapto-s-triazin-haltige Halogenkautschukmischungen, die durch gekennzeichnet sind, daß sie silikatische Füllstoffe, insbesondere gefällte feinteilige Kieselsäure einer Menge von 10 - 250 phr (parts per hundred parts rubber), bevorzugt 10 bis 60 enthalten.

Es ist auch möglich neben den silikatischen Füllstoffen 10 bis 40 phr, bevorzugt 10 bis 20 phr Ruß einzusetzen. Dabei ist zu beachten, daß im Vergleich zum Ruß die Kieselsäuremenge immer überwiegt. Besonders geeignet sind die Dimercapto-s-triazine der Formel (I)

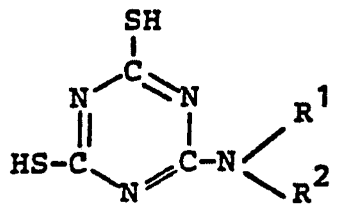

in der bedeuten

$R^1$ und $R^2$, gleich oder verschieden, lineare oder verzweigte gesättigte Alkylreste mit 1 bis 5 Kohlenstoffatomen oder Cycloalkylrest mit 6 bis 8 Kohlenstoffatomen, insbesondere $C_6H_{11}$. Sie werden bevorzugt allein eingesetzt.

Die in den erfindungsgemäßen Mischungen eingesetzten Mengen belaufen sich auf 0,25 bis 3,0 phr. Den verwendeten Halogenkautschuken werden weiter die nach dem Stand der Technik üblichen Bestandteile zugemischt. Polychloroprenkautschuk werden vorzugsweise 1 bis 10 phr ZnO, 1 bis 10 phr MgO und gegebenenfalls 10 bis 50 phr Weichmacher sowie Alterungsschutzmittel in den üblichen Dosierungen zugesetzt. Chlorierte Polyäthylene enthalten neben den erfindungsgemäßen Mengen an silikatischen Füllstoffen und gegebenenfalls Ruß 1 bis 15 phr MgO sowie gegebenenfalls 1 bis 30 phr Weichmacher.

Setzt man Epichlorhydrinhomo- und -copolymerisate ein, verwendet man vorzugsweise 1 bis 5 phr Zinkstearat und 1 bis 10 phr MgO sowie gegebenenfalls Weichmacher. Anstelle von Zinkstearat kann man auch ZnO und Stearinsäure getrennt anwenden.

Chlor- und Brombutylkautschuken setzt man dagegen geeigneterweise 1 bis 5 phr Stearinsäure, 1 bis 10 phr ZnO, 1 bis 3 phr Schwefel sowie gegebenenfalls Weichmacher und Klebrigmacher zu.

Zur besseren Verteilung können ZnO und Schwefel auch in Pastenform oder als geöltes Produkt eingesetzt werden.

Zu den geeigneten Halogenkautschuken zählen insbesondere halogenierte Butylkautschuke, Chlorkautschuk, Polychloropren, Epichlorhydrinhomo- und -copolymerisate, chlorierte Polyäthylene und Polymerisate des 2-Chlorbutadien-1,3.

Die nach der Erfindung verwendbaren silikatischen Füllstoffe, auch als Mischung von zwei oder mehr Füllstoffen, sind an sich in der Kautschuktechnologie bekannte Füllstoffe. Dabei bezieht sich der Begriff "silikatischer Füllstoff" auf mit Kautschuken verträgliche bzw. in Kautschukmischungen einarbeitbare Füllstoffe, die aus Silikaten bestehen, Silikate enthalten und bzw. oder Silikate im weitesten Sinne chemisch gebunden enthalten. Insbesondere zählen zu den silikatischen Filllstoffen:

Hochdisperse Kieselsäure-Füllstoffe (Siliciumdioxid) mit spezifischen Oberflächen im Bereich von etwa 5 bis 1000, vorzugsweise 20 bis 400 $m^2/g$ (mit gasförmigem Stickstoff bestimmt nach der Methode gemäß BET) und mit Primärteilchengrößen im Bereich von etwa 10 bis 400 nm, die hergestellt werden können z. B. durch Ausfällung aus Lösungen von Silikaten mit anorganischen Säuren, durch hydrothermalen Aufschluß, durch hydrolytische und bzw. oder oxidative Hochtemperaturumsetzung auch Flammenhydrolyse genannt, von flüchtigen Siliciumhalogeniden oder durch ein Lichtbogenverfahren. Diese Kieselsäuren können

gegebenenfalls auch als Mischoxide oder Oxidgemische mit den Oxiden der Metalle Aluminium, Magnesium, Calcium, Barium, Zink, Zirkon und/oder Titan vorliegen.

Synthetische Silikate, z. B. Aluminiumsilikat oder Erdalkalisilikate wie Magnesium- oder Calciumsilikat, mit spezifischen Oberflächen von etwa 20 bis 400 $m^2/g$ und Primärteilchengrößen von etwa 10 bis 400 nm.

Natürliche Silikate, z. B. Kaoline, Tone und Asbeste sowie natürliche Kieselsäuren wie beispielsweise Quarz und Kieselgur. Glasfasern und Glasfasererzeugnisse wie Matten, Stränge, Gewebe, Gelege und dergleichen sowie Mikroglaskugeln.

Die genannten silikatischen Füllstoffe werden in Mengen von 10 bis zu 250 Gewichtsteilen, bezogen auf 100 Gewichtsteile des Kautschukpolymeren, eingesetzt. Als Füllstoffmischungen können genannt werden Kieselsäure/Kaolin oder Kieselsäure/Glasfasern/Asbest sowie Verschnitte der silikathaltigen Verstärkerfüllstoffe mit den bekannten Gummirußen, z. B. Kieselsäure/ISAF-Ruß oder Kieselsäure/Glasfaserkord/HAF-Ruß. Erfindungsgemäß werden als silikatische Füllstoffe die hochdispersen oder aktiven Kieselsäuren vorgezogen, insbesondere die gefällten Kieselsäuren und vorzugsweise in Mengen von 10 bis 100 Gewichtsteilen, bezogen auf 100 Gewichtsteile Kautschuk.

Ruß kann zusätzlich in den erfindungsgemäßen Kautschukmischungen zugegen sein. Es können Furnace-Ruße, Gasruße oder Flammruße, vorzugsweise mit einer BET-Oberfläche von 10 - 200 $m^2/g$, insbesondere 10 - 150 $m^2/g$, verwendet werden.

Zur Herstellung der Kautschukmischungen, die neben den in der Gummiindustrie geläufigen Bestandteilen als Beschleuniger ein 2-Dialkylamino-4,6-dimercapto-s-triazin enthalten, sind die bekannten Mischaggregate geeignet.

Mischmethoden und Mischzeiten werden den verschiedenen Polymeren angepaßt. Die folgende Tabelle zeigt die Verfahrensweise bei Einsatz eines Innenmischers und die nach Ablauf der angegebenen Zeiten jeweils erfolgenden Mischschritte. Die Durchflußtemperaturen liegen zwischen 55° und 65° C, vorzugsweise bei 60° C.

Tabelle 1

| | | |
|---|---|---|
| 1) | 0 - 1 | min. ECO, CO, Zinkstearat (ZnO, Stearinsäure) |
| | 1 - 2,5 | min. 1/2 Füllstoff, MgO |
| | 2,5 - 4 | min. 1/2 Füllstoff |
| | 4 | min. Ausfahren |
| 2) | 0 - 1 | min. Polychloropren |
| | 1 - 3 | min. MgO, Stearinsäure, Vaseline, 1/2 Füllstoff |
| | 3 - 5 | min. 1/2 Füllstoff, Naftolen ZD® |
| | 5 | min. Ausfahren |
| 3) | 0 - 3 | min. chloriertes PE, Füllstoff, Maglite® D, DOP |
| | 3 - 4 | min. Säubern |
| | 4 | min. Ausfahren (Up side down) |
| 4) | 0 - 1 | min. Chlor-, Brombutyl |
| | 1 - 2,5 | min. 1/2 Füllstoff, Stearinsäure |
| | 2,5 - 4 | min. 1/2 Füllstoff, Weichmacher |
| | 4 - 4,5 | min. Säubern |
| | 4,5 | min. Ausfahren |

Nach einer Zwischenlagerung der Mischungen von 24 Std. bei R.T. werden die Beschleuniger und Vernetzer auf einem Walzenpaar bei einer Durchflußtemperatur von etwa 45 bis 55° C, vorzugsweise von 50° C hinzugemischt.

Industrielle Einsatzgebiete für die beschriebenen Kautschukmischungen und deren Vulkanisate sind beispielsweise:

Technische Gummiartikel wie Kabelmäntel, Schläuche, Heizschläuche, Treibriemen, Keilriemen, Förderbänder, Walzenbelege, Dichtungen, elektrische Isolierungen, Auskleidungen, Imprägnierungen und Beschichtungen von hitzebeständigen Geweben. Dämpfungs- und Vibrationselemente und dergleichen Artikel, an die in der Praxis hohe Anforderungen gestellt werden.

Die physikalischen Prüfungen wurden bei Raumtemperatur nach folgenden Normvorschriften ausgeführt:

| | |
|---|---|
| Spannungswert an [Mpa] 6 mm starken Ringen | DIN 53504 |
| Compression Set B | ASTM D 395 |

Erklärung der verwendeten Abkürzungen und Handelsnamen:

1. Polymere:

| | | |
|---|---|---|
| CM | chloriertes PE | Bayer® CM 3630 |
| CR | Polychloropren | Baypren® 210 |
| CO | Epichlorhydrinhomopolymerisat | Hydrin® 100 |
| ECO | Epichlorhydrin-ethylenoxidcopolymerisat | Hydrin® 200 |
| Cl -IIR | Chlorbutyl | Butyl HT 1068 |
| BR - IIR | Brombutyl | Brombutyl X2 |

2. Beschleuniger

| | |
|---|---|
| Echo® S | 1,3,4-Thiadiazolen-5-thion-2-2-thiobenzolat |
| Vanax® 808 | N-Phenyl-3,5-diethyl-2-propyl-1,4-dihydropyridin |
| Vulkacit® Thiuram® MS | Tetramethylthiurammonosulfid |
| Vulkacit® DOTG | N,N'-Di-o-tolylguanidin |
| Diak® Nr. 1 | Hexamethylendiamincarbamat |
| Vulkacit® Thiuran | Tetramethylthiuramdisulfid |
| Vulkacit® DM | Benzothiazyldisulfid |
| V 25 | 2-Diethylamino-4,6-dimerkaptotriazin |
| V 72 | 2-Dimethylamino-4-6-dimerkaptotriazin |
| DOP | Dioctylphthalat (Weichmacher) |
| Maglite® D | Magnesiumoxid |
| Naftolen® ZD | aromatischer Weichmacher |

Geringere Mengen an V 25 führen zu höheren Spannungswerten im Vergleich zum konventionellen Echo S/Vanax 808-System, wie die beiden folgenden Tabellen zeigen

| | 1 | 2 | 3 | 4 | 5 |
|---|---|---|---|---|---|
| Bayer CM 3630 | 100 | 100 | 100 | 100 | 100 |
| Maglite DE | 10 | 10 | 10 | 10 | 10 |
| Ultrasil VN 3 | 50 | 50 | 50 | 50 | 50 |
| DOP | 20 | 20 | 20 | 20 | 20 |
| Echo S | 2,5 | - | - | - | - |
| Vanax 808 | 0,8 | 0,8 | 0,8 | - | - |
| V 25 | - | 1,5 | 2,0 | 1,5 | 2,0 |

Ungaltert:
Vulkanisationstemperatur: 160° C

| | | | | | |
|---|---|---|---|---|---|
| Vulkanisationszeit: | 40 | 40 | 40 | 40 | 40 |
| (min) | 60 | 60 | 60 | 60 | 60 |
| Spannungswert 100 % | 5,3 | 5,3 | 6,2 | 6,9 | 7,4 |
| (MPa) | 5,4 | 5,3 | 6,9 | 6,5 | 7,5 |
| Spannungswert 200 % | 9,2 | 9,3 | 10,8 | 11,5 | 12,2 |
| (MPa) | 9,5 | 9,3 | 11,7 | 11,1 | 12,5 |
| Spannungswert 300 % | 13,4 | 13,2 | 15,2 | 15,4 | 16,4 |
| (MPa) | 13,6 | 13,4 | 16,3 | 15,2 | 16,7 |
| Bruchdehnung | 450 | 390 | 350 | 370 | 310 |
| (%) | 390 | 340 | 310 | 320 | 300 |

Tabelle 2: V 25 in mit Kieselsäure gefülltem CM
Tabelle 3: V 72 in mit Kieselsäure gefülltem CM

| | 6 | 7 | 8 | 9 | 10 |
|---|---|---|---|---|---|
| Bayer CM 3630 | 100 | 100 | 100 | 100 | 100 |
| Maglite DE | 10 | 10 | 10 | 10 | 10 |
| Ultrasil VN 3 | 50 | 50 | 50 | 50 | 50 |
| DOP | 20 | 20 | 20 | 20 | 20 |
| Echo S | 2,5 | - | - | - | - |
| Vanax 808 | 0,8 | 0,8 | 0,8 | - | - |
| V 72 | - | 1,5 | 2,0 | 1,5 | 2,0 |

Ungealtert:
Vulkanisationstemperatur: 160° C

| | | | | | |
|---|---|---|---|---|---|
| Vulkanisationszeit: | 40 | 40 | 40 | 40 | 40 |
| (min) | 60 | 60 | 60 | 60 | 60 |
| Spannungswert 100 % | 4,1 | 4,5 | 5,3 | 4,6 | 5,4 |
| (MPa) | 4,1 | 4,8 | 5,5 | 4,7 | 5,4 |
| Spannungswert 200 % | 6,7 | 7,0 | 8,2 | 7,1 | 8,2 |
| (MPa) | 6,9 | 7,6 | 8,6 | 7,3 | 8,3 |
| Spannungswert 300 % | 10,0 | 10,2 | 11,6 | 10,2 | 11,5 |
| (MPa) | 10,2 | 11,0 | 12,3 | 10,6 | 11,7 |

Tabelle 4: V 72 in mit Kieselsäure gefülltem CR
Die Verwendung von V 72 führt gleichzeitig zu einem höheren Spannungswert und verringertem Compression Set

| | 11 | 12 |
|---|---|---|
| Baypren 210 | 100 | 100 |
| MgO, extra leicht | 4 | 4 |
| Stearinsäure | 1 | 1 |
| Vaseline | 1 | 1 |
| Ultrasil VN 3 | 40 | 40 |
| Naftolen ZD | 10 | 10 |
| ZnO RS | 5 | 5 |
| ETU | - | - |
| TMTM | 1 | - |
| DOTG | 0,5 | - |
| Schwefel | 0,5 | - |
| V 72 | - | 0,75 |
| Vulkanisationstemperatur: 170° C, | (60 min) | |
| Spannungswert 100 % | | |
| (MPa) | 1,5 | 1,7 |
| Spannungswert 200 % | | |
| (MPa) | 2,7 | 3,4 |
| Spannungswert 300 % | | |
| (Mpa) | 4,1 | 6,0 |
| Compression Set B | | |
| (Vulkanisationszeit 70 min) | | |
| 22 h/70° C (%) | 19,4 | 17,2 |

Tabelle 5: V 25 in mit Ruß/Kieselsäure gefülltem CR
Eine Kombination aus 3 Beschleunigern kann gegen V 25 bei höherem Spannungswert und verringertem Compression Set ausgetauscht werden

| | 13 | 14 |
|---|---|---|
| Baypren 210, ML 4 = 50 | 100 | 100 |
| MgO, extra leicht | 4 | 4 |
| Stearinsäure | 1 | 1 |
| Vaseline | 1 | 1 |
| Ultrasil VN 3 | 20 | 20 |
| CORAX N 762 | 20 | 20 |
| Naftolen ZD | 10 | 10 |
| ZnO RS | 5 | 5 |
| Vulkacit NPV/C | - | - |
| Vulkacit Thiuram MS | 1 | - |
| Vulkacit DOTG | 0,5 | - |
| Schwefel | 0,5 | - |
| V 25 | - | 1 |
| Ungealtert: | | |
| Vulkanisationstemperatur:170° C | | |
| Vulkanisationszeit: | 20 | 20 |
| (min) | 40 | 40 |
| Spannungswert 100 % | 1,3 | 1,4 |
| (MPa) | 1,4 | 1,6 |
| Spannungswert 200 % | 2,7 | 3,0 |
| (MPa) | 2,9 | 3,5 |
| Spannungswert 300 % | 5,1 | 5,6 |
| (MPa) | 5,4 | 6,5 |
| Compressions Set B | | |
| (Vulkanisationszeit 50 min) | | |
| 22 h/70° C (%) | 10,9 | 7,2 |

Tabelle 6: V 25 in mit Kieselsäure gefülltem CO
Es zeigen sich höhere Spannungswerte bei geringerem Compression Set

| | 15 | 16 |
|---|---|---|
| Epichlorhydrinmonopolymerisat | 100 | 100 |
| Zinkstearat | 1 | - |
| ZnO aktiv | - | 3 |
| Stearinsäure | - | 1 |
| MgO, extra leicht | 3,5 | 3,5 |
| Ultrasil VN 3 | 40 | 40 |
| Hexamethylendiamincarbamat | 1,5 | - |
| V 25 | - | 2 |
| Ungealtert: | | |
| Vulkanisationstemperatur: 160° C | | |
| Vulkanisationszeit: | 30 | 60 |
| (min) | | |
| Spannungswert 100 % | 2,7 | 3,3 |
| (MPa) | | |
| Spannungswert 200 % | 3,3 | 4,8 |
| (MPa) | | |
| Spannungswert 300 % | 4,1 | 6,4 |
| (MPa) | | |
| Compression Set B | | |
| (Vulkanisationszeit 40 min) | | |
| 22 h/70° C (%) | 44,2 | 27,3 |

Tabelle 7: V 25 in mit Kieselsäure gefülltem ECO

| | 17 | 18 |
|---|---|---|
| Epichlorhydrin-ethylenoxidcopolymerisat | 100 | 100 |
| Zinkstearat | 1 | - |
| ZnO aktiv | - | 3 |
| Stearinsäure | - | 1 |
| MgO, extra leicht | 3,5 | 3,5 |
| Ultrasil VN 3 | 40 | 40 |
| Hexamethylendiamincarbamat | 1,5 | - |
| V 25 | - | 2 |
| Ungealtert: | | |
| Vulkanisationstemperatur: 160°C | | |
| | 3 | 4 |
| Vulkanisationszeit: (min) | 60 | 60 |
| Spannungswert 100 % (MPa) | 2,0 | 3,0 |
| Spannungswert 200 % (MPa) | 2,8 | 4,5 |
| Spannungswert 300 % (MPa) | 3,7 | 6,1 |
| Compression Set B (Vulkanisationszeit 70 min) 22h/70°C (%) | 31,3 | 22,8 |

Tabelle 8: V 25 in Chlor- und Brombutylkautschuk (Kieselsäure-gefüllt)

| | 19 | 20 | 21 | 22 |
|---|---|---|---|---|
| Chlorbutyl HT 1066 | 100 | 100 | - | - |
| Brombutyl X2 | - | - | 100 | 100 |
| Stearinsäure | 1 | 1 | 1 | 1 |
| Ultrasil VN 3 | 40 | 40 | 40 | 40 |
| Sunpar 150 | 5 | 5 | 5 | 5 |
| Koresin | 2 | 2 | 2 | 2 |
| ZnO-Paste | 5 | 5 | 5 | 5 |
| Benzothiazyldisulfid | 1,5 | - | 1,5 | - |
| Tetramethylthiuramdisulfid | 0,5 | - | 0,5 | - |
| V 25 | - | 2 | - | 2 |
| Schwefel-Paste | 1,1 | 1,1 | 1,1 | 1,1 |
| Ungealtert: | | | | |
| Vulkanisationstemperatur: 165°C | | | | |
| Vulkanisationszeit: (min) | 60 | 60 | 60 | 60 |
| Spannungswert 100 % (MPa) | 1,2 | 1,8 | 1,5 | 2,5 |
| Spannungswert 200 % (Mpa) | 1,7 | 2,8 | 2,3 | 4,1 |
| Spannungswert 300 % (MPa) | 2,2 | 3,7 | 3,2 | 5,8 |
| Compression Set B (Vulkanisationszeit 70 min) 22 h/70°C (%) | 29,8 | 28,9 | 43,2 | 28,4 |

**Patentansprüche**

1. Vulkanisierbare, eine als Beschleuniger 2-sek.Amino-4,6-dimercapto-s-triazinverbindung enthaltende Halogenkautschukmischung, dadurch gekennzeichnet, daß sie 10 - 250 phr (Teile pro hundert Teile Kautschuk) eines silikatischen Füllstoffs und 0,25 - 3,0 phr dieses Beschleunigers enthält.

2. Mischung gemäß Anspruch 1, dadurch gekennzeichnet, daß sie zusätzlich 10 bis 40 phr Ruß enthält, wobei die Menge des silikatischen Fullstoffs überwiegt.

3. Mischung gemäß den Ansprüchen 1 und 2, dadurch gekennzeichnet, daß sie eine Triazinverbindung der Formel I

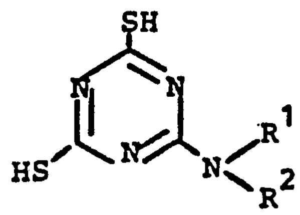

enthält, in der bedeuten:
$R^1$ und $R^2$, gleich oder verschieden, einen linearen oder verzweigten, gesättigten Alkylrest mit 1 bis 5 Kohlenstoffatomen oder einen Cycloalkylrest mit 6 bis 8 Kohlenstoffatomen.

**Claims**

1. A vulcanizable halogenated rubber mixture containing a 2-sec.-amino-4,6-dimercapto-s-triazine compound as accelerator, characterized in that it contains 10 to 250 phr (parts per hundred parts rubber) of a silicate filler and 0.25 to 3.0 phr of the accelerator.

2. A mixture as claimed in claim 1, characterized in that it additionally contains 10 to 40 phr carbon black, the quantity of silicate filler predominating.

3. A mixture as claimed in claims 1 and 2, characterized in that it contains a triazine compound corresponding to formula I

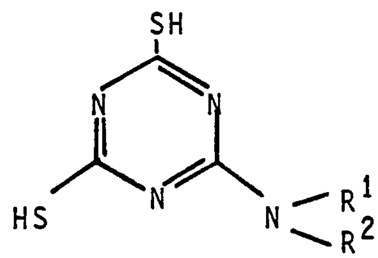

in which
$R^1$ and $R^2$ may be the same or different and represent a linear or branched, saturated $C_1$ - $C_5$ alkyl radical or a $C_6$ - $C_8$ cycloalkyl radical.

**Revendications**

1. Compositions de caoutchouc halogéné contenant en tant qu'accélérateur une 2-amino secondaire 4,6-dimercapto S-triazine caractérisées en ce qu'elles renferment de 10 à 250 ppcc (parties pour 100 parties de caoutchouc) d'une substance de remplissage silicatée et de 0,25 à 3,0 ppcc de cet accélérateur.

2. Composition selon la revendication 1, caractérisée en ce qu'elle renferme à titre additionnel de 10 à 40 ppcc de noir, pour laquelle la quantité de substance de remplissage silicatée est prédominante.

3. Mélange selon les revendications 1 et 2, caractérisé en ce qu'il contient une substance triazinique de formule I

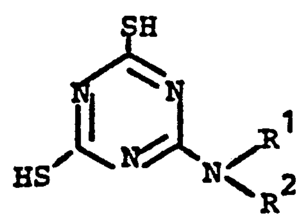

dans laquelle
$R^1$ et $R^2$, semblables ou différents, représentent un reste alcoyle saturé linéaire ou ramifié, ayant de 1 à 5 atomes de carbone ou un reste cycloalcoyle ayant de 6 à 8 atomes de carbone.